Europäisches Patentamt

(19) European Patent Office

Office européen des brevets

(11) Publication number : 0 575 132 A1

(12) EUROPEAN PATENT APPLICATION

(21) Application number : 93304605.4

(22) Date of filing : 14.06.93

(51) Int. Cl.⁵ : G01N 21/55, G02B 17/06

(30) Priority : 17.06.92 US 900205

(43) Date of publication of application :
22.12.93 Bulletin 93/51

(84) Designated Contracting States :
DE FR GB

(71) Applicant : Hewlett-Packard Company
3000 Hanover Street
Palo Alto, California 94304 (US)

(72) Inventor : King, David A.
1300 Waverley Street
Palo Alto, CA 94301 (US)
Inventor : Seher, Jens-Peter
Remppesstrasse 9
W-7000 Stuttgart 70 (DE)

(74) Representative : Williams, John Francis et al
WILLIAMS, POWELL & ASSOCIATES 34
Tavistock Street
London WC2E 7PB (GB)

(54) Optical measuring device.

(57) In a surface plasmon resonance (SPR) apparatus, a source beam (113, 312) is generated along a line perpendicular to the SPR surface (102). The source beam is translated into an incident beam to the SPR surface at selectable angles of incidence. The reflections of the source beam, corresponding to the different angles of incidence, are translated and rotated into a beam (112, 316) receivable by a detector along a line which is also perpendicular to the SPR surface. The source, detector (108) and SPR surface can then be held in fixed relative positions and a more stable apparatus can therefore be constructed.

FIG. 2

EP 0 575 132 A1

This present invention relates generally to optical instruments and specifically to a device for facilitating measurement of reflections of a source beam projecting to a reflective surface at selectable angles of incidence.

This invention is advantageously applicable to measurement of surface plasmon resonance (SPR).

Surface plasmon resonance is being used in biosensing, in such fields as immunoassays and nucleic acid detection. Basically, surface plasmons are electromagnetic waves created along an interface between a conductive material and a non-conductive material. A common technique for their creation is to deposit a thin conductive film on a surface of a glass plasm and direct a beam of electromagnetic radiation thereto at an angle of incidence above the critical angle so that it undergoes total internal reflection. The internal reflection creates an evanescent electromagnetic wave at a region outside of the prism adjacent to the surface, forming surface plasmons.

Surface plasmon resonance occurs when the momentum (or the wave vector) and energy (i.e. frequency) of the evanescent electromagnetic wave are made to match the momentum and energy of the surface plasmons respectively. It is characterised by a sharp decrease in intensity of the reflected beam as its energy is transferred, because of the resonance, to the surface plasmons.

The wave vector $K_e$ of the evanescent wave is defined by the equation:

$$K_e = (\omega/c)\, n \sin\theta,$$

where $\omega$ is the angular frequency of the incident beam of electromagnetic radiation, $c$ is the speed of light in vacuum, $n$ is the refractive index of glass and $\theta$ is the angle of incidence. The wave vector of the surface plasmon is defined by the equation:

$$K_{sp} = (\omega/c)\, (1/\epsilon_m + 1/\epsilon_s)^{-1/2},$$

where $\epsilon_m$ is the real part of the dielectric constant of the metal and $\epsilon_s$ is the dielectric constant of the substance under test (or in the absence of any substance, of air) surrounding the metal.

At resonance, the wave vector of the evanescent wave is the same as that of the surface plasmons. Therefore, occurrence of the surface plasmon resonance is thus given by the equation:

$$K_e = K_{sp}, \text{ or}$$
$$(\omega/c)\, n \sin\theta = (\omega/c)(1/\epsilon_m + 1/\epsilon_s)^{-1/2}.$$

The above equality provides a useful tool for measuring differences between the values of $\epsilon_s$ of different materials. It also provides a useful tool for detecting the presence of trace surface chemicals in a substance that alters its $\epsilon_s$ value. By measuring the differences of $K_e$ at resonance, the changes in $\epsilon_s$ can be determined.

Surface plasmon resonance apparatuses heretofore known which utilize the above equality condition have all measured the differences of $K_e$ by varying $\theta$ and sensing the reflected beam at different values of

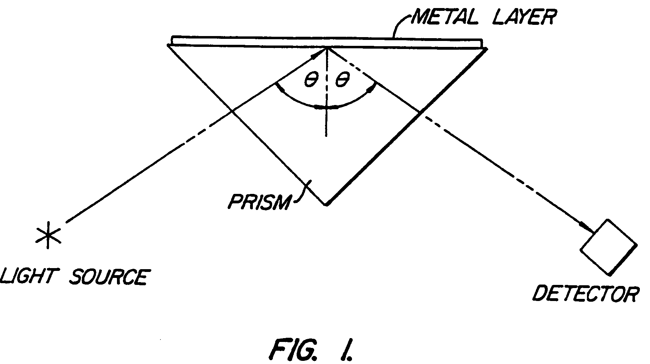

$\theta$, as generally shown in Fig. 1 to detect the resonance. In these prior art surface plasmon resonance apparatuses, sensing the reflected beam at different values of $\theta$ has been accomplished by three known methods.

Under a first method, the position of the light source is fixed. The prism providing the medium for generating the surface plasmons is rotated in order to change the value of $\theta$. The detector for detecting the reflected beam is also rotated by $2\theta$. This method is considered undesirable because of the requirement to move both the detector and the prism.

Under a second method, as disclosed in "The ATR Method With Focused Light - Application to Guided Waves On A Grating" by E. Kretschmann, Vol. 26, number 1, Optics Communications, 1978, and in U.S. Patent Number 4,997,278, entitled "Biological Sensors", issued March 5, 1991 to Finlan et al, both the light source and the prism are fixed. Refractive optics are then employed to spread the incident light into a cone of light beams with different values of $\theta$. The reflected beams are then detected by an array of diodes. When the incident light is spread, unfortunately, its intensity decreases. In typical applications where the intensity of the beam is needed, for example, for illumination (such as on a layer of fluorophores), this method would become undesirable.

Under a third method, disclosed in European Patent Application Number 89304570.8, filed on May 5, 1989 by Finlan et al, the positions of both the light source and the prism are fixed. A rotating mirror is used to direct the source to the SPR medium at different angles of incidence. The reflection of the source beam is deflected by another curved mirror into the detector. Unfortunately, because the beam may enter the detector from different angles, the detector therefore needs to detect the reflected beam from different directions. Such need requires the detector to have a large collection solid angle, and detectors having such capability are typically either expensive or less sensitive. The detector is also required to be positioned at a specific point - the focal point of the curve mirror. This is inconvenient and renders the system more susceptible to alignment errors.

## Summary Of The Invention

This present invention discloses an optical system that is advantageously applicable to surface plasmon resonance apparatuses. The system according to the present invention comprises an optical medium having a reflective surface, a source generating a source beam of electromagnetic radiation along a first line, a detector for detecting a beam of electromagnetic radiation along a second line, and means for translating and rotating said source beam into a incident beam into said reflective surface at selectable angles of incidence and translating and rotating reflected beams of said source beam along said second line for detection by said detector.

Because the positions of the source, detector and the reflective surface according to the present invention are fixed, a more reliable system can be constructed thereunder.

**Brief Description of The Drawings**

Fig. 1 illustrates generally the concept of detecting surface plasmon resonance by changing the angle of incidence of the source of electromagnetic radiation.

Fig. 2 illustrates a first embodiment of the present invention.

Fig. 3 illustrates a second embodiment of the present invention.

**Description Of The Preferred Embodiment**

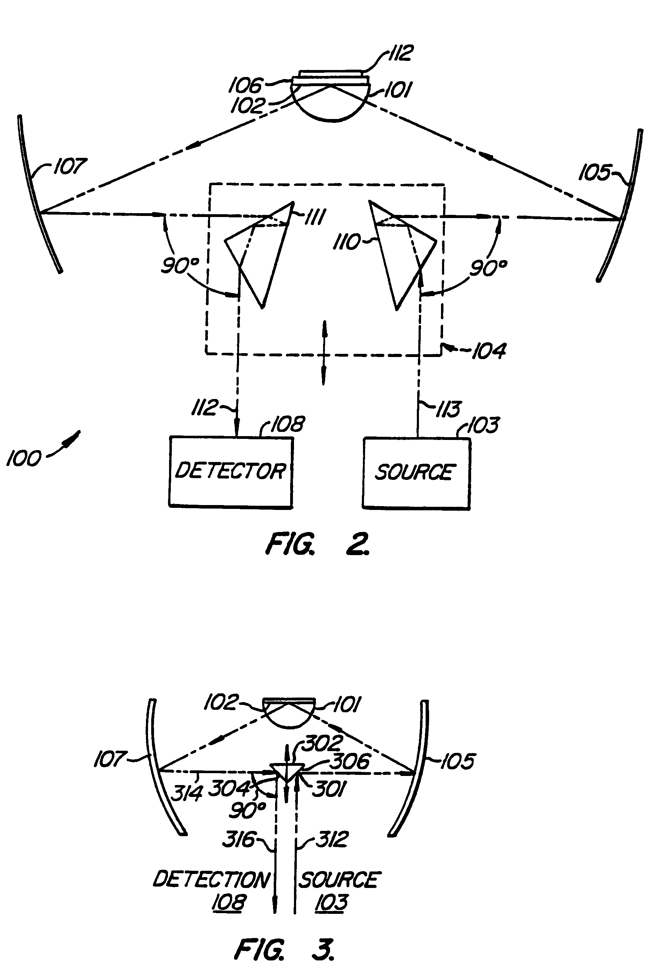

Figure 2 illustrates a test apparatus 100 which utilizes surface plasmon resonance and in which the present invention is embodied. The apparatus 100 has a block of transparent (transparent to electromagnetic radiation) material such as a glass prism 101 providing a surface 102 from which total internal reflection is formed when a beam of electromagnetic radiation is projected thereon at appropriate angles of incidence.

To create surface plasmons, a thin metallic (for example, silver) layer 106 is deposited on the surface 102 of the prism 101. On top of the metallic layer 106 is the test material 112 the refractive index of which is to be determined.

Preferably, prism 101 is a semi-cylindrical or semi-spherical prism, as disclosed in the above identified U.S. Patent Number 4,997,278 to Finlan et al, so that electromagnetic radiation can enter at different angles of incidence without undergoing refraction.

Surface plasmons are created when a beam of electromagnetic radiation, (e.g. a laser) 103 with properties appropriate for producing surface plasmons, enters the prism 101 at appropriate angles of incidence. Means (not shown) are provided for appropriately polarizing and collimating the beam of electromagnetic radiation as required.

The source 103 produces the laser beam along a line 113 preferably perpendicular to the surface 102 of the prism 101. The source beam enters into a translation stage 104 in which it undergoes a deflection or rotatioin of preferably ninety degrees (90°) angularly.

The deflected beam coming out of the translation stage 104 is then focused onto the surface 102 of the prism 101 by a first converging mirror 105, such as a spherical mirror or a parabolic mirror, the focal point of which is at a predetermined point along the surface 102 of the prism 101.

At angles of incidence above the critical angle, the laser beam undergoes an internal reflection, thereby creating surface plasmons along the metallic layer 106.

The reflection of the laser beam coming out of the prism 101 is deflected by a second converging mirror 107, such as a circular mirror or a parabolic mirror, which has a focal point overlapping the focal point of the first converging mirror 105.

The second converging mirror 107 deflects the reflected beam back into the translation stage 104. Inside the translation stage 104, the reflected beam undergoes a deflection or rotation of ninety degrees (90°) angularly and exits the translation stage 104 along a line perpendicular to the surface 102 of the prism 101, to be received by the detector 108.

The translation stage 104 is movable along a line preferably perpendicular to the surface 102 of the prism 101. By moving the translation stage 104, the source beam can be directed to the first converging mirror 105 along different ones of a plurality of parallel lines, although they would still be focused back to the same predetermined point on the surface 102 of the prism 101. By moving the translation stage 104, the angle of incidence of the source beam onto the surface 102 can be changed.

Because the focal point of the second converging mirror 107 overlaps the focal point of the first converging mirror 105, the reflected beam will enter the second converging mirror 107 even when the angle of incidence of the source beam varies. From the second converging mirror 107, the reflected beam will be deflected into the translation stage 104, and therefrom to the detector 108. Detector 108 can detect the reflected beam along line 112. As it does not have to be fixed at a point as in Finlan et al, it is less susceptible to errors.

The translation stage 104 has a first reflective means 110 for rotating the source beam ninety degrees (90°) angularly. It has a second reflective means 111 for rotating a reflected beam ninety degrees (90°) angularly so it can be received by the detector 108 along the predetermined line.

An optical device which can be advantageously used as the first reflective means 110 and/or the second reflective means 111 is disclosed by Taylor et al. in "Turning A Perfect Corner", Am. J. Phys. 47(1), January 1979. The disclosure relates to a prism having an index of refraction of 1.5. The cross section of the prism is an isosceles right angle and its hypotenuse is made reflective, such as by silver plating.

The prism disclosed by Taylor et al. is used as the first reflective means 110 and the second reflective means 111 in the translating block 104 of the embodiment shown in Fig. 2.

According to the Taylor et al. disclosure, when a beam enters the prism such that it undergoes an initial refraction, two internal reflections, and a final refraction, as shown in Fig. 2, before emerging from the prism, it will be deflected by 90° angularly. An advantage of the prism disclosed by Taylor et al. is that the 90° angular deflection is substantially independent of the orientation of the prism and the optical index of the glass.

A less sophisticated implementation of the translation stage 104 is in Fig. 3 when two mirrors forming a right angle prism mirror 301 are used. The surface 302 facing the right angle of prism mirror 301 is preferably substantially parallel to surface 102, so that mirror surfaces 304, 306 would deflect or rotate the source beam 312 and the reflected beam 314 by 90° as shown in Fig. 3.

To further facilitate test of surface plasmon resonance, a layer of fluorophores is added, as suggested by Attridge et al in European Patent 353937, filed 1990, and in "Sensitivity enhancement of optical immunosensors by the use of a surface plasmon resonance fluoroimmunoassay", Biosensors and Bioelec., 6, 201 1991, as well as in European Patent Application 91109430.8 filed in 1991 by Jens-Peter Seher, a co-inventor of the present invention. The layer of fluorophores will be excited by surface plasmons within about an optical wavelength of the metal layer, thereby generating fluorescence at a longer wavelength.

While the invention has been illustrated above in reference to the particular implementations and components, it will be understood that such implementations and components may be varied and modified without departing from the invention whose scope is to be limited only by the following claims. For example, while preferably, the source and reflected beams are deflected or rotated by 90°, it will be understood that deflection or rotation by other angles can also be used and are within the scope of the invention; such systems would also enable the angle of incidence to be selected and altered without movement of the test block, source or detector.

**Claims**

1. An optical system comprising:
    a test block (101) having a reflective surface,
    a source (103) providing a source beam of electromagnetic radiation along a first line,
    a detector (108) for detecting a beam of electromagnetic radiation along a second line,
    means (104, 105, 107, 301) for translating and rotating said source beam into an incident beam into said reflective surface at a selected angle of incidence and translating reflected beams of said incident beam from said reflective surface into a beam long said second line for detection by said detector, wherein the angle of incidence is selectable without movement of the block, the source or the detector.

2. An optical system as in claim 1, wherein said means for translating and rotating includes:
    a first converging mirror having a first focal point on said reflective surface.
    a second converging mirror having a second focal point overlapping said first focal point,
    a reflection complex, movable along a third line parallel to first line, having a first reflective means for converting said source beam into an incident beam to said first converging mirror and a second reflective means for converting beams from said second converging mirror into a beam along said second line for detection by said detector.

3. An optical system as in claim 2, wherein said first, second and third lines are perpendicular to said surface and wherein said first reflection means in said reflection complex deflects said source beam ninety degrees angularly, and said second reflective means in said reflection complex deflects beams from said second converging mirror ninety degrees angularly.

4. An optical system as in claim 2 or 3, wherein said first and second reflective means are part of a prism mirror.

5. An optical system as in claim 2 or 3, wherein at least one of said first reflective means and second reflective means is a right angle prism with a reflective hypotenuse surface.

6. An optical system as in claim 2 or 3, wherein at least one of said first and second converging mirrors is a parabolic concave mirror.

7. An optical system as in claim 2 or 3, wherein at least one of said first and second converging mirrors is a spherical concave mirror.

8. An optical system as in claim 1, wherein said test block is a block for producing surface plasmons.

9. An optical system as in claim 8, wherein said test block comprises a semi-spherical prism.

10. An optical system as in claim 8, wherein said test block comprises a semi-cylindrical prism.

11. An optical system as in claim 8, wherein said test block further comprises a layer of fluorophores.

12. A method for creating and sensing surface plasmon resonance, comprising the steps of:
    (a) providing a medium having a surface (102) capable of generating surface plasmons,

(b) providing a source beam (113, 312) of electromagnetic radiation along a first line,

(c) deflecting said source beam, at a first point along said first line, to produce an incident beam,

(d) focusing said incident beam to said surface at an angle of incidence to said surface appropriate to produce a reflected beam,

(e) converting said reflected beam into a sensing beam (112, 316) at a second point along a second line,

(f) sensing intensity of said sensing beam,

(g) changing the angle of incidence by deflecting said source beam at step (c) at a third point, different from said first point, along said first line, and by converting said reflected beam at step (e) into a sensing beam at a fourth point along the second line.

13. The method as in claim 12, wherein the providing step (b) provides a beam perpendicular to said surface, wherein said deflecting step (c) deflects the source beam ninety degrees angularly and wherein the converting step (e) converts the reflected beam into said second line which is parallel to said first line.

FIG. 1.

FIG. 2.

FIG. 3.

**European Patent Office**

## EUROPEAN SEARCH REPORT

Application Number

EP 93 30 4605

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-5 106 196 (BRIERLEY)<br>* abstract *<br>* column 5, line 52 - column 7, line 32 *<br>* column 8, line 17 - line 20 *<br>* column 8, line 42 - line 58 *<br>* column 9, line 23 - line 26 * | 1-3,6,7 | G01N21/55<br>G02B17/06 |
| Y | * figures 2,4 * | 1-5,8,<br>11-13 | |
| X | US-A-5 075 551 (WATANEBE)<br>* abstract *<br>* column 1, paragraph 1 -paragraph 2 *<br>* column 7, line 10 - line 15 * | 1,8,12 | |
| Y | * figures 1,2 * | 12,13 | |
| D,Y | EP-A-0 353 937 (ARES-SERONO)<br>* claim 1 * | 1,8,11 | |
| D,Y | AMERICAN JOURNAL OF PHYSICS<br>vol. 47, no. 1, January 1979,<br>pages 113 - 114<br>S. TAYLOR ET AL 'Turning a perfect corner'<br>* the whole document * | 1-5 | |
| A | INSTRUMENTS AND EXPERIMENTAL TECHNIQUES<br>vol. 17, 1974, NEW YORK US<br>pages 1232 - 1234<br>YU. N. KOROLEV ET AL 'Universal attachment<br>for performing investigations by the<br>method of disruptive mutiple total<br>internal reflection'<br>* abstract *<br>* page 1232, paragraph 4 *<br>* page 1233, last line - page 1234, line<br>1; figure 1 * | 1,4,12 | TECHNICAL FIELDS<br>SEARCHED (Int. Cl.5 )<br><br>G01N<br>G02B |

The present search report has been drawn up for all claims

| Place of search | Date of completion of the search | Examiner |
|---|---|---|
| THE HAGUE | 24 SEPTEMBER 1993 | THOMAS R.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................
& : member of the same patent family, corresponding
    document

EPO FORM 1503 03.82 (P0401)